# EUROPEAN PATENT SPECIFICATION

(11) **EP 4 163 090 B1**
(45) Date of publication and mention of the grant of the patent: **18.03.2026**
(21) Application number: 21201762.8
(22) Date of filing: 08.10.2021
(51) Int. Cl.: B29C 65/14, B29C 65/16, B29K 507/04, B29L 31/34

(54) **LIGHT THROUGH TRANSMISSION CONNECTING DEVICE, CONNECTING METHOD USING THE DEVICE AS WELL AS CONNECTION STRUCTURE**
VORRICHTUNG ZUM VERBINDEN DURCH ÜBERTRAGUNG VOM LICHT, VERBINDUNGSVERFAHREN MIT VERWENDUNG DER VORRICHTUNG SOWIE VERBINDUNGSSTRUKTUR
DISPOSITIF DE CONNEXION PAR TRANSMISSION DE LUMIÈRE, PROCÉDÉ DE CONNEXION UTILISANT LE DISPOSITIF ET LA STRUCTURE DE CONNEXION

(43) Date of publication of application: 12.04.2023
(73) Proprietor: Branson Ultraschall Niederlassung der Emerson Technologies GmbH & Co. OHG, 63128 Dietzenbach (DE)
(72) Inventor: KIEHL, Oliver, 63322 Rödermark (DE)
(74) Representative: HWP Intellectual Property

(56) References cited:
- EP-A1- 3 235 628
- KR-A- 20110 083 507
- JAESCHKE PETER ET AL: "Advanced laser welding of high-performance thermoplastic composites", JOURNAL OF LASER APPLICATIONS, AMERICAN INSTITUTE OF PHYSICS, 2 HUNTINGTON QUADRANGLE, MELVILLE, NY 11747, vol. 27, no. S2, 28 February 2015 (2015-02-28), XP012195040, DOI: 10.2351/1.4906379

## Description

### 1. Field of the invention

The present invention is related to a through transmission connecting device for connecting a first component made of a light absorbing material to a second component made of a light transmissive material by means of a light transmission bonding or welding technology, a connecting method using the through transmission connecting device as well as a resulting connection structure consisting of a first component made of a light absorbing material and a second component made of a light transmissive material.

### 2. Background of the invention

**In** the field of energy storage, in particular of storing electrical energy, various solutions exist. One of these solutions is the use of batteries, which has become more and more important in the recent years.

Within the field of batteries, again several alternative solutions exist. Among others, a flow battery or redox flow battery can be used which is a type of electrochemical cell where chemical energy is provided by two chemical components dissolved in liquids that are pumped through the system on separate sides of a membrane. An example of a redox battery is described in EP 0 312 875 A1.

**In** such a battery system, the electrode is usually comprised of graphite due to the large electrochemical potential window. An exemplary production method for a respective graphite electrode is described in EP 2 519 479 A2. Therein, a layered composite material is produced containing at least one layer of a textile fabric and at least one graphite-containing molded body which is obtained by a method in which graphite particles are mixed with at least one solid organic additive to form a mixture and the thus obtained mixture is then compressed.

In the article "Advanced laser welding of high-performance thermoplastic composites" by Peter Jaeschke, et al. in Journal of Laser Applications, American Institute of Physics, 2 Huntington Quadrangle, Melville, NY 11747, Vol. 27, No. S2, February 28, 2015, a laser transmission welding process is evaluated with respect to the influence of the carbon fiber reinforcement within the laser absorbing part as well as the glass fiber reinforcement within the laser transparent part on the weld seam formation.

A method for manufacturing a sheet joined body, a roll body, an optical film, and a polarized film is described in KR 2011 0083507 A. For easily manufacturing the sheet joined body by joining sheet members without a light absorbent, the ends of sheet members are arranged in contact with each other. The contact parts of the sheet members are contacted at a light absorbing member. The light absorbing member has the light absorptiveness to the wavelength of laser light used. The light absorbing member radiates heat by the irradiation of a laser light and the ends of the sheet members are thermally fused. The sheet joined body is made by taking the contact part off the light absorbing member. The wavelength of the laser light is 800 nm to 2,000 nm.

Finally, EP 3 235 628 A1 describes a laser welding apparatus that includes: a support member including a heat generation portion which has a size that is limited to correspond to a size of a welding area of a plurality of plastic components and is made from a material that absorbs a laser beam and generates heat, and which generates heat of a temperature that is equal to or greater than a melting temperature of the plastic components. The apparatus further includes a laser beam irradiation unit for converging a laser beam to be transmitted through the plurality of plastic components, and irradiating the laser beam toward the heat generation portion through the plurality of plastic components. Also, a welding controller is present for causing a laser beam to be irradiated at the heat generation portion using the laser beam irradiation unit to thereby cause the heat generation portion to generate heat, and welding abutting faces of a welding area of the plurality of plastic components with heat that is generated.

In particular in view of the prior art, it is a problem of the present invention to provide an alternative method for producing a respective graphite electrode for use in an electrochemical cell as well as a respective device for producing such a graphite electrode.

### 3. Summary of the invention

The above object is solved by a through transmission connecting device according to independent claim 1, a connecting method using the inventive through transmission connecting device according to independent claim 9 as well as a connection structure according to independent claim 13. Further preferred embodiments and developments result from the following description, the drawings as well as the appending claims.

An inventive through transmission connecting device for connecting a first component made of a light absorbing material to a second component made of a light transmissive material by means of a light transmission bonding technology, comprises a first tool mounted to a first support retaining the first component and a second tool mounted to a second support retaining the second component, wherein the first and the second tool are moveable with respect to each other and the first tool is at least partly made of or comprises a layer of a thermal isolator having a high thermal resistance, wherein the thermal isolator has a thermal conductivity of λ ≤ 2 W/(m K) so that the thermal isolator at least hinders thermal conduction.

The general construction of a trough transmission connecting device, for example a through transmission welding device, as well as the course of procedure is known in the prior art, in particular in the field of plastic welding. Therein, the through transmission welding devices are used for connecting a first plastic component of a light or laser absorbing material to a second plastic component of a light or laser transmissive material. The respective process is also denoted as laser plastic welding, through-transmission welding or polymer welding although the concept to connect two plastic components is the same.

The basic principle of this joining or connecting method is transmitting laser radiation through one plastic component, i.e., the transmissive component, to create a connection. Unlike standard welding where the energy is applied at the surface of the materials, transmission connecting methods apply the energy in between two plastic components at their interfaces. This can be done by irradiating the complete connecting portion, connecting structure or weld line at the same time, i.e., simultaneous light or laser transmission welding. Further methods are, beside others, the quasi simultaneous through transmission welding or the contour welding. Within the present invention, the usage of a simultaneous method is particularly preferred.

Now, the structure and functioning of the inventive trough transmission connecting device is discussed based on the exemplary production of a graphite electrode for use in an electrochemical cell or the like.

The exemplary graphite electrode consists of a first component made of a light or laser absorbing material. In a preferred example, the first component is a plastic matrix material filled with graphite particles. The second component, which provides for example a frame for a later mounting of the graphite containing first component into the redox flow battery cell stack, consists preferably of a plastic which is transparent for the light or laser used.

For connecting, i.e., bonding or welding, the first component to the second component, first the first and second component are arranged between the first and the second tool. For example, the first component is arranged in the first tool and the second component is arranged on the first component or, alternatively, in the second tool. In this regard, it is assumed that the light, in particular the laser light, for heating the first component at the connecting structure or portion comes from the second tool and, thus, passes through the second component first. For example, the first tool which is mounted to the first support is a lower tool and the first support is a lifting table. Accordingly, the second tool which is mounted to the second support is an upper tool comprising a waveguide having a transparent plate at its exit end and being mounted with the opposite entry end to an upper mounting plate as upper support. Preferably, the first and/or the second support are at least partly made of a metal, in particular steel or aluminum.

After the components have been arranged in the device, the first and the second tool are moved relative to each other into a connecting position in which the first and the second component abut each other at least partly, preferably with the respective connecting portions.

Thereafter, a weld force is applied on the first and the second component and the first and the second component are irradiated by means of a light source while the weld force and, thus, a resulting contact pressure is maintained. Preferably, the first and the second component are irradiated in the connecting portions. After the light transmission, in particular laser light transmission, through the transparent or upper second component, the incident light is absorbed by the lower first component and transformed into heat within the material. Once the laser light is converted into heat by the absorbing component, the thermal energy is transferred to the transparent component to allow for it to soften and melt. By ensuring the two components are in intimate contact the heat energy can be conducted to the transparent component.

For being able to use a trough transmission connecting method in combination with the exemplary first component, i.e., the plastic matrix material filled with graphite particles, the known devices for laser transmission welding are not suitable. In particular, it was found that it is not possible with common laser transmission welding devices to sufficiently heat the components to be connected so that a reliable connection results. Even an increase in the energy amount introduced by the light source into the components could not completely overcome this deficiency.

After intensive research, it was found that using a thermal isolator as first tool or using a layer of a thermal isolator at the first tool overcomes this drawback. Due to the usage of this thermal isolator, applying a through transmission connecting method for producing the exemplary graphite electrode as discussed above is realizable. This is because the thermal isolator at least hinders or preferably prevents thermal conduction to, for example, the first support. This will be discussed in the following.

As last step of the method, and in particular after the light source has been switched off and a sufficient time has passed in which the components are pressed together with the weld force for allowing the softened material to harden, the first and the second tool are moved relative to each other out of the connecting position. Now, the user can remove the produced connection structure, i.e., the exemplary graphite electrode having a frame element for assembly of the redox flow battery.

**Based on** the above explanations, it is a first difference to the prior art and a specific technical advantage of the present invention that a light transmission bonding technology is used for producing a graphite electrode. Particularly the usage of this technology makes the production easier and cost efficient. A further advantage is that a device by means of which the light transmission bonding technology can be applied for manufacturing such graphite electrodes was developed.

In this regard, and particularly with respect to the through transmission connecting device, it was found that the inventive through transmission connecting device can further be used for any application, preferably any electrochemical application, in which a light or laser absorbing and highly heat conductive material as first component shall be connected, i.e., bonded or welded, to a light or laser transparent second component.

As graphite has a thermal conductivity of λ = 119 to 165 W/(m K), all materials having a thermal conductivity in the range of λ ≥ 50 W/(m K), preferably λ ≥ 75 W/(m K) and particularly preferred λ ≥ 100 W/(m K), are considered as highly heat conductive materials. In this regard, it is pointed out that the thermal conductivity of a material is an intensive property that indicates its ability to conduct heat. Concerning the measurement method for thermal conductivity, it is referred to the laser flash analysis or laser flash method. This analysis or method is used to measure thermal diffusivity of a variety of different materials by means of an energy pulse which heats one side of a plane-parallel sample and the resulting time dependent temperature rise on the backside due to the energy input is detected.

For the sake of completeness, it is pointed out that due to the process used, i.e., the light transmission bonding technology, the thermal isolator must, besides a low thermal conductivity, fulfill further requirements which are inherent to this technology. For example, and as mentioned above, the first or absorbing component is heated by means of laser light. The thermal isolator must thus have a respective thermal resistance. In other words, a melting point of the thermal isolator must be well above the temperature to which the absorbing component is heated during the connecting method.

Further, the weld force applied for connecting the two components to each other must be considered. Accordingly, the thermal isolator, which must withstand this weld force and the resulting contact pressure, must have a respective resistance in this regard, too.

All these factors must be considered when evaluating a suitable thermal isolator. In the following, these requirements will become clearer based on the preferred embodiments.

In a preferred embodiment of the through transmission connecting device, the thermal isolator has a thermal conductivity of λ ≤ 1 W/(m K). By this requirement, it is particularly ensured that the thermal isolator has a low thermal conductivity, provides a suitable thermal isolation and, thus, prevents heat conduction into the first tool.

It is further preferred in the inventive through transmission connecting device that the thermal isolator has a melting point of tₘₚ ≥ 200 °C, preferably of tₘₚ ≥ 250 °C. By this requirement, the above mentioned second item is addressed. In particular, the thermal isolator does not melt during the connecting of the two components.

As a result of the above, it is particularly advantageous that the thermal isolator is a thermoplastic material, in particular a polyether ether ketone (PEEK). PEEK as particularly preferred material for the thermal isolator has on the one hand a very low thermal conductivity of about λ = 0.25 W/(m K) and, on the other hand, a high melting point of about tₘₚ = 335 °C. Additionally, it has a sufficient resistance against the applied weld force, as discussed above.

It is furthermore preferred that the thermal isolator has a thickness in the range of 1 mm ≤ tᵢ ≤ 10 cm, preferably 2.5 mm ≤ tᵢ ≤ 7.5 cm and particularly preferred 5 mm ≤ tᵢ ≤ 5 cm. By means of these thickness ranges heat conduction can be prevented in a reliable manner. In this regard, the thickness of the first tool or the respective layer depends on and is interrelated with the material used. For example, a material having a low thermal conductivity, like PEEK, may be present in a smaller thickness compared to a material having a higher thermal conductivity for which a larger thickness may be required to prevent heat conduction into the first support.

According to a particularly preferred embodiment of the through transmission connecting device, the first tool comprises additionally a non-stick coating adjacent to the thermal isolator so that the non-stick coating is present at least in the contact area of the first tool with the first component. Preferably, the non-stick coating consists of polytetrafluoroethylene. Due to this coating, a sticking of the first component to the first tool can be prevented in a process reliable manner.

With respect to the requirement regarding the force resistance, as mentioned above, it is preferable that the thermal isolator of the first tool is resistant to force, in particular to compression force, such tht a sufficient stability of the thermal isolator is present during use. Specifically, a damaging of the termal isolator due to the forces applied for pressing the components to be welded against each other, such as crack formation, shall not occur.

An inventive connecting method using an inventive through transmission connecting device for connecting a first component made of a light absorbing material to a second component made of a light transmissive material, wherein the first component has a high thermal conductivity at least in a connecting portion in the range of λ ≥ 50 W/(m K), comprises the steps of: arranging the first component in the first tool, arranging the second component in the second tool, moving the first and the second tool relative to each other into a connecting position in which the first and the second component abut each other at least partly, preferably with the respective connecting portions, thereafter applying a weld force on the first and the second component as well as irradiating the first and the second component by means of a light source while applying the weld force, wherein the first and the second component are preferably irradiated in the connecting portions, subsequently moving the first and the second tool relative to each other out of the connecting position. By means of this method, a connection structure, like the above exemplary graphite electrode, can be produced by means of a transmission bonding technology. For avoiding repetitions, it is referred to the above discussion with respect to the resulting technical effects and advantages.

According to a preferred embodiment of the connecting method, the light source is a laser light source. Further preferred, the weld force is in the range that neither the components to be welded to each other nor the thermal isolator are damaged during the connecting step. Concerning both preferred embodiments, it is also referred to the above discussion of the through transmission connecting device and its respectively preferred embodiments.

Preferably, the step of arranging the second component in the second tool comprises the steps of: arranging the second component on the first component in the first tool and moving the first and the second tool relative to each other into a transfer position in which the second tool receives the second component. Thus, the second component is transferred automatically into the second tool which eliminates the respective manual step of arranging the second component in the second tool. In this way, the method is further automatized.

In general, and with respect to the exemplary graphite electrode as connection structure to be produced, the method is not limited to the use of graphite or plastic matrix material filled with graphite as first component but it is particularly preferred to use the method in combination with any material as first component which absorbs light and has a thermal conductivity in the range of λ ≥ 75 W/(m K), particularly preferred λ ≥ 100 W/(m K).

Finally, an inventive connection structure consists of a first component made of a light absorbing material and a second component made of a light transmissive material, wherein the first component has at least in a connecting portion, in which it is connected to the second component, a high thermal conductivity in the range of λ ≥ 50 W/(m K). In this regard, it is also referred to the above explanations for avoiding repetitions.

### 4. Short description of the drawings

In the following, the present invention will be described in detail based on the drawings. In the drawings, the same reference signs denote the same elements and/or components. It shows:
- Figure 1: an exemplary embodiment of an inventive through transmission connecting device in an initial state,
- Figure 2: the exemplary embodiment of the inventive through transmission connecting device in a contacting position,
- Figure 3: the exemplary embodiment of the inventive through transmission connecting device in a pressure position,
- Figure 4: the exemplary embodiment of the inventive through transmission connecting device in a connecting position at the beginning of the connecting phase,
- Figure 5: the exemplary embodiment of the inventive through transmission connecting device in the connecting position in the middle of the connecting phase,
- Figure 6: the exemplary embodiment of the inventive through transmission connecting device in the connecting position at the end of the connecting phase,
- Figure 7: the exemplary embodiment of the inventive through transmission connecting device in an unloading or removal position,
- Figure 8: a flow chart of a preferred embodiment of an inventive connecting method.

### 5. Detailed description of preferred embodiments

In the following, an exemplary embodiment of an inventive through transmission connecting device 1 will be described. Usually, through transmission connecting devices are used for welding two plastic components to each other, for example in the field of the automotive industry when producing a rear light or the like. The respective process is also denoted as laser plastic welding, through-transmission welding or polymer welding although the concept to connect two plastic components is the same.

The basic principle of this joining or connecting method is transmitting laser radiation through one plastic component, i.e., the transmissive component, to create a connection. Unlike standard welding where the energy is applied at the surface of the components to be connected, transmission connecting methods apply the energy in between two plastic components at their interfaces. This can be done by irradiating the complete connecting portion, connecting structure or weld line at the same time, i.e., simultaneous light or laser transmission welding. Further methods are, beside others, the quasi simultaneous through transmission welding or the contour welding. Within the present invention, the usage of a simultaneous method is particularly preferred.

The through transmission connecting device 1 provided by the present invention is, however, adapted to a different technical application field, in particular the technical field of graphite electrodes for use in electrochemical cells of, e.g., a redox flow battery. As will be explained below, the through transmission connecting device 1 is not limited to the manufacturing of graphite electrodes or the processing of graphite but may be used in combination with any component having a light absorbing property as well as a high thermal conductivity.

In this respect, and as graphite has a thermal conductivity of λ = 119 to 165 W/(m K), in particular all materials having a thermal conductivity in the range of λ ≥ 50 W/(m K), preferably λ ≥ 75 W/(m K) and particularly preferred λ ≥ 100 W/(m K), are considered as highly heat conductive materials.

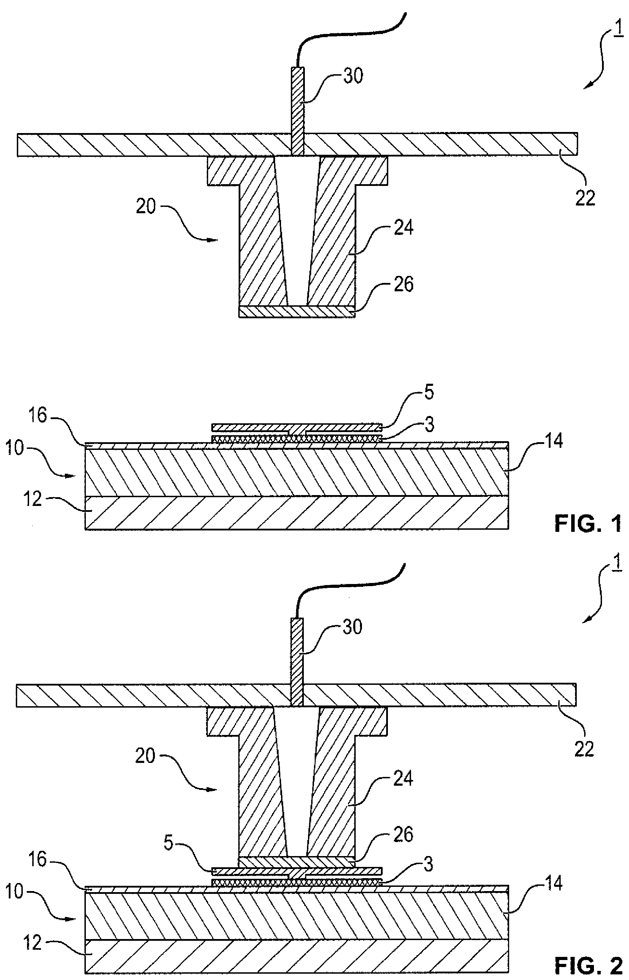

Now referring to figure 1, the general construction of the through transmission connecting device 1 is discussed. The through transmission connecting device 1 comprises a first tool 10 mounted to a first support 12 for receiving the first component 3, i.e., retaining the first component 3 in use. Further, the through transmission connecting device 1 comprises a second tool 20 mounted to a second support 22 for receiving the second component 5, i.e., retaining the second component 5 in use.

As shown, the first tool 10 is a lower tool. Accordingly, the first support 12 may be a lifting table or the like. The second tool 20 is, thus, an upper tool so that the second support 22 may present an upper mounting plate. The lifting table as first support 12 and/or the mounting plate as second support 22 are made of a metal, preferably steel or aluminum.

In the second support 22, an opening for fastening a light guide or laser fiber 30 is provided. The light guide or laser fiber 30 is connected with the opposing end to a laser light source (not shown). The second tool 20 is present as negative waveguide 24, i.e., a waveguide 24 defining a cavity in its interior in which during later use laser light 32 exiting the laser fiber 30 is reflected. The waveguide 24 comprises at the exit end of the laser light 32 a transparent plate 26 to apply a force to the components 3, 5 to be connected by means of the second tool 20.

As discussed above, the first support 22 is a lifting table. By means of this feature, the first 10 and the second tool 20 are moveable with respect to each other. In this regard, it must be noted that other arrangements are possible which provide a relative movement between the first 10 and the second tool 20.

Further, the first tool comprises a layer of a thermal isolator 14 having a high thermal resistance.

The thermal isolator 14 has a thermal conductivity of λ ≤ 2 W/(m K), preferably λ ≤ 1 W/(m K).

Due to the process used, i.e., the light transmission bonding technology, the thermal isolator 14 must, besides this low thermal conductivity, fulfill further requirements which are inherent to this technology. For example, the first or absorbing component 3 is heated during the process by means of laser light. The thermal isolator 14 must thus have a respective thermal resistance, as mentioned above. In other words, a melting point of the thermal isolator must be well above the temperature to which the absorbing component 3 is heated during the connecting method. To this end, the thermal isolator has a preferably a melting point of tₘₚ ≥ 200 °C, preferably of tₘₚ ≥ 250 °C.

Further, the weld force applied during use for connecting the two components 3, 5 to each other must be considered. Accordingly, the thermal isolator 14 which must withstand this weld force and the resulting contact pressure must have a respective resistance in this regard, too.

An exemplary material, which fulfills the above requirements, is a thermoplastic material, in particular a polyether ether ketone (PEEK). PEEK as particularly preferred material for the thermal isolator 14 has on the one hand a very low thermal conductivity of about λ = 0.25 W/(m K) and, on the other hand, a high melting point of about tₘₚ = 335 °C. Additionally, it has a sufficient resistance against the usually applied weld force F, as discussed above.

For the sake of completeness, the thermal isolator 14 has a thickness in the range of 1 mm ≤ tᵢ ≤ 10 cm, preferably 2.5 mm ≤ tᵢ ≤ 7.5 cm and particularly preferred 5 mm ≤ tᵢ ≤ 5 cm. By means of these thickness ranges, heat conduction can at least be hindered or even prevented in a reliable manner. In this regard, the thickness of thermal isolator 14 depends on and is interrelated with the material used. For example, a material having a low thermal conductivity, like PEEK, may be present in a smaller thickness compared to a material having a higher thermal conductivity for which a larger thickness may be required to hinder or prevent heat conduction into the first support 12.

On top of the layer of the thermal isolator 14, a non-stick coating 16 is present. Thus, the non-stick coating 16 is present at least in the contact area of the first tool 10 with the first component 3. The non-stick coating 16 consists preferably of polytetrafluoroethylene. Due to this coating, a sticking of the first component 3 to the first tool 10 can be prevented in a process reliable manner, as discussed below.

Now, the structure and functioning of the adapted trough transmission connecting device 1 is explained based on the exemplary production of a graphite electrode as resulting connection structure 7 for use in an electrochemical cell or the like.

The exemplary graphite electrode consists initially of the first component 3 made of a light or laser absorbing material. In the present example, the first component 3 is a plastic matrix material filled with graphite particles. The second component 5, which provides for example a frame for a later mounting of the graphite containing first component 3 into a redox flow battery cell stack, consists of a plastic which is transparent for the light or laser light used. Nevertheless, and as discussed above, any other material having a high thermal conductivity can be used as absorbing component 3, for example a plastic matrix material filled with another mineral.

For connecting, i.e., bonding or welding, the first component 3 to the second component 5, first the first 3 and second component 5 are arranged between the first 10 and the second tool 20. This state is shown in figure 1. Here, the first component 3 is arranged on the first tool 10 and the second component 5 is arranged on the first component 3. Nevertheless, any arrangement may be chosen in which the light, in particular the laser light, for heating the first component 3 at the connecting structure or portion comes from the second tool 20 and, thus, passes through the second component 5 first.

After the components 3, 5 have been arranged in the through transmission connecting device 1, the first 10 and the second tool 20 are moved relative to each other into a contact position, as shown in figure 2. Here, the first 10 and the second component 20 abut each other at least partly, preferably with the respective connecting portions.

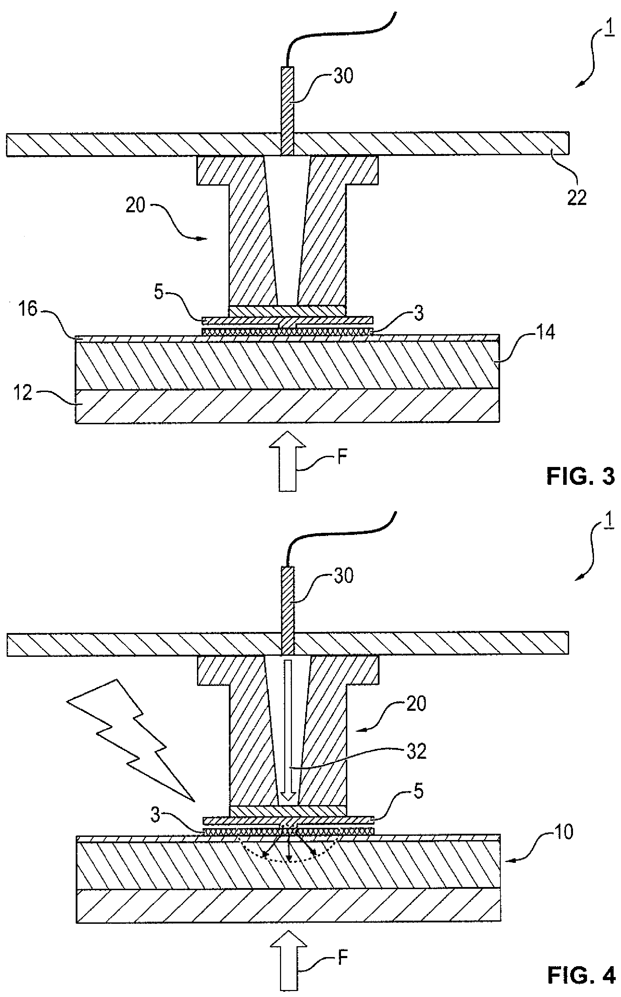

Thereafter, and as indicated in figure 3 by means of the weld force F, a contact pressure is applied on the first 3 and the second component 5. The weld force F applied depends usually on the components to be connected. Specifically, the weld force F must be chosen such that a reliable connection is formed between the components while at the same time avoiding a damaging of the components. Accordingly, the thermal isolator 14 of the first tool 10 is resistant to the application of force, in particular to compression force, in the range required for suitably connecting the components to each other.

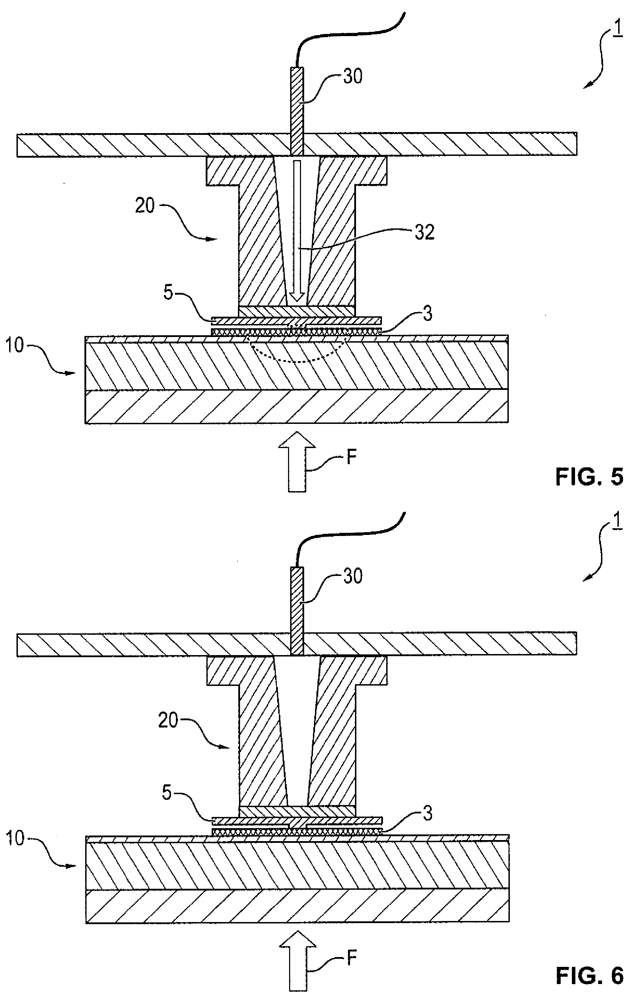

While maintaining the applied weld force F, the laser light source is switched on and the first 3 as well as the second component 5 are irradiated by means of the laser light 32 exiting the not shown laser light source, running through the laser fiber 30 into the waveguide 24 and through the plate 26. This is shown in figures 4 and 5. Preferably, the first 3 and the second component 5 are irradiated in the connecting portions or connecting structure.

The incident laser light 32 is absorbed by the lower first component 3 and transformed into heat within the material. Once the laser light 32 is converted into heat by the absorbing component 3, the thermal energy is transferred to the transparent component 5 to allow for it to soften and melt so that a melting zone results. By ensuring the two components 3, 5 are in intimate contact the heat energy can be conducted to the transparent component 5.

For establishing a reliable connection by means of a light transmission bonding technology, the through transmission connecting device 1 is provided with the thermal isolator 14. Due to the usage of this thermal isolator 14, applying a through transmission connecting method for producing the exemplary graphite electrode as discussed above is realizable. This is because the thermal isolator 14 at least hinders or preferably prevents thermal conduction to, for example, the first support 12. As a result, the loss of thermal energy is avoided, and the connecting process is facilitated.

As shown in figure 6, the two components 3, 5 are pressed against each other even after the laser light has been switched off for allowing the softened material to harden. In particular, a recrystallisation of the softened or melted material is achieved.

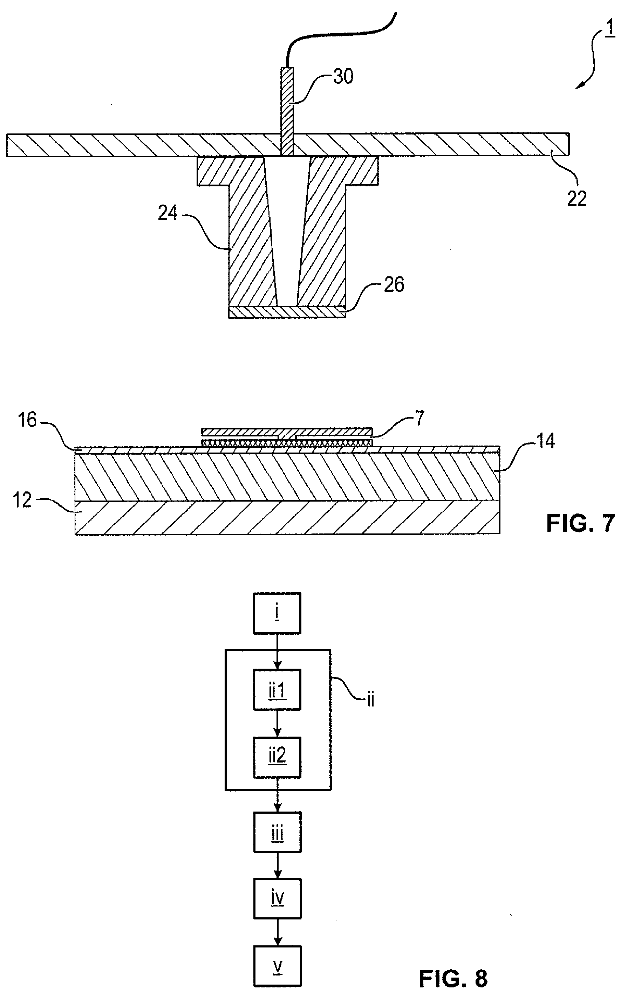

Finally, and as shown in figure 7, the first 10 and the second tool 20 are moved relative to each other out of the connecting position. Now, a user can remove the produced connection structure 7, i.e., the exemplary graphite electrode having a frame element for assembly of the redox flow battery.

Based on the above explanations, it is a first difference to the prior art and a specific technical advantage that a light transmission bonding technology is used for producing a graphite electrode. Particularly the usage of this technology makes the production of the graphite electrode easier and more cost efficient.

In this regard, and particularly with respect to the through transmission connecting device 1, it was found that the through transmission connecting device 1 can further be used for any application, preferably any electrochemical application, in which a light or laser absorbing and highly heat conductive material as first component 3 shall be connected, i.e., bonded or welded, to a light or laser transparent second component 5.

Now referring to figure 8, a flow chart of an embodiment of an inventive connecting method using the through transmission connecting device 1 for connecting a first component 3 made of a light absorbing material to a second component 5 made of a light transmissive material is discussed. As mentioned above, the first component 3 has a high thermal conductivity at least in a connecting portion. A high thermal conductivity is considered to be in the range of λ ≥ 50 W/(m K), preferably λ ≥ 75 W/(m K) and particularly preferred λ ≥ 100 W/(m K).

In a first method step i an arranging of the first component 3 in the first tool 10 takes place. In a second step ii, which may be performed before, after or at the same time as the first step i, an arranging of the second component 5 in the second tool 20 takes place. For further automatizing the method, it is preferred that the second step ii comprises the steps of arranging the second component 5 on the first component 3 in the first tool 10 (step ii1) and moving the first 10 and the second tool 20 relative to each other into a transfer position in which the second tool 20 receives the second component 5 (step ii2). By proceeding this way, the second component 5 is transferred automatically into the second tool 20 which eliminates the respective manual step.

After both components 3, 5 have been arranged appropriately, a moving of the first 10 and the second tool 20 relative to each other into a connecting position in which the first 3 and the second component 5 abut each other at least partly, preferably with the respective connecting portions, is performed in step iii.

In the connecting position, a weld force is applied in step iv on the first 3 and the second component 5. Further, the first 3 and the second component 5 are irradiated by means of the light source while applying or maintaining the weld force. The respective light source is preferably a laser light source.

Subsequently, a moving of the first 10 and the second tool 20 relative to each other out of the connecting position is performed in step v. After this step has been performed, the user may remove or unload the resulting connection structure 7 from the through transmission connecting device 1.

### 6. List of reference signs

- 1: through transmission connecting device
- 3: first component
- 5: second component
- 7: connection structure

- 10: first tool
- 12: first support
- 14: thermal isolator
- 16: non-stick coating

- 20: second tool
- 22: second support
- 24: waveguide
- 26: plate

- 30: light guide or laser fiber
- 32: laser light

- F: weld force

## Claims

1. A through transmission connecting device (1) for connecting a first component (3) made of a light absorbing material to a second component (5) made of a light transmissive material by means of a light transmission bonding technology, comprising
a. a first tool (10) mounted to a first support (12) retaining the first component (3) and
b. a second tool (20) mounted to a second support (22) retaining the second component (5), wherein
c. the first (10) and the second tool (20) are moveable with respect to each other and
d. the first tool (10) is at least partly made of or comprises a layer of a thermal isolator (14) having a high thermal resistance, **characterized in that**
e. the thermal isolator (14) has a thermal conductivity of λ ≤ 2 W/(m K) so that the thermal isolator (14) at least hinders thermal conduction.

2. The through transmission connecting device (1) according to claim 1, wherein the thermal isolator (14) has a thermal conductivity of λ ≤ 1 W/(m K).

3. The through transmission connecting device (1) according to one of the preceding claims, wherein the thermal isolator (14) has a melting point of tₘₚ ≥ 200 °C, preferably of tₘₚ ≥ 250 °C.

4. The through transmission connecting device (1) according to one of the preceding claims, wherein the thermal isolator (14) is a thermoplastic material, in particular a polyether ether ketone (PEEK).

5. The through transmission connecting device according to one of the preceding claims, wherein the thermal isolator (14) has a thickness in the range of 1 mm ≤ tᵢ ≤ 10 cm, preferably 2.5 mm ≤ tᵢ ≤ 7.5 cm and particularly preferred 5 mm ≤ tᵢ ≤ 5 cm.

6. The through transmission connecting device (1) according to one of the preceding claims, wherein the first tool (10) comprises additionally a non-stick coating (16) adjacent to the thermal isolator (14) so that the non-stick coating (16) is present at least in the contact area of the first tool (10) with the first component (3).

7. The through transmission connecting device (1) according to claim 6, wherein the non-stick coating (16) consists of polytetrafluoroethylene.

8. The through transmission connecting device (1) according to one of the preceding claims, wherein the first (12) and/or the second support (22) are at least partly made of a metal, in particular steel or aluminum.

9. A connecting method using a through transmission connecting device (1) according to one of the preceding claims for connecting a first component (3) made of a light absorbing material to a second component (5) made of a light transmissive material, wherein the first component (3) has a high thermal conductivity at least in a connecting portion in the range of λ ≥ 50 W/(m K), and the connecting method comprises the steps of:
a. arranging the first component (3) in the first tool (10),
b. arranging the second component (5) in the second tool (20),
c. moving the first (10) and the second tool (20) relative to each other into a connecting position in which the first (3) and the second component (5) abut each other at least partly, preferably with the respective connecting portions, thereafter
d. applying a weld force on the first (3) and the second component (5) as well as irradiating the first (3) and the second component (5) by means of a light source while applying the weld force, wherein the first (3) and the second component (5) are preferably irradiated in the connecting portions, subsequently
e. moving the first (10) and the second tool (20) relative to each other out of the connecting position.

10. The connecting method according to claim 9, wherein the light source is a laser light source.

11. The connecting method according to one of the claims 9 or 10, wherein the step of arranging the second component (5) in the second tool (20) comprises the steps of:
b1. arranging the second component (5) on the first component (3) in the first tool (10) and
b2. moving the first (10) and the second tool (20) relative to each other into a transfer position in which the second tool (20) receives the second component (5).

12. The connecting method according to one of the claims 9 to 11, wherein the thermal conductivity of the first component (3) is in the range of λ ≥ 75 W/(m K), particularly preferred λ ≥ 100 W/(m K).

13. A connection structure (7) consisting of a first component (3) made of a light absorbing material and a second component (5) made of a light transmissive material, wherein the first component (3) has at least in a connecting portion, in which it is connected to the second component (5), a high thermal conductivity in the range of λ ≥ 50 W/(m K).

## Patentansprüche

1. Eine Durchstrahlverbindungsvorrichtung (1) zum Verbinden eines aus einem lichtabsorbierenden Material hergestellten ersten Bauteils (3) mit einem aus einem lichtdurchlässigen Material hergestellten zweiten Bauteil (5) mittels einer Lichtdurchstrahlverbindungstechnik, umfassend
a. ein erstes Werkzeug (10), das an einem ersten Träger (12) angeordnet ist und das erste Bauteil (3) hält,
b. ein zweites Werkzeug (20), das an einem zweiten Träger (22) angeordnet ist und das zweite Bauteil (5) hält, wobei
c. das erste (10) und das zweite Werkzeug (20) in Bezug zueinander bewegbar sind und
d. das erste Werkzeug (20) zumindest teilweise aus einem thermischen Isolator (14) besteht oder eine Schicht eines thermischen Isolators (14) umfasst, der einen hohen Wärmewiderstand aufweist, **dadurch gekennzeichnet, dass**
e. der thermische Isolator (14) eine thermische Leifähigkeit von λ ≤ 2 W/(m K) aufweist, sodass der thermische Isolator (14) zumindest Wärmeleitung verhindert.

2. Die Durchstrahlverbindungsvorrichtung (1) gemäß Anspruch 1, wobei der thermische Isolator (14) eine thermische Leifähigkeit λ ≤ 1 W/(m K) aufweist.

3. Die Durchstrahlverbindungsvorrichtung (1) gemäß einem der vorhergehenden Ansprüche, wobei der thermische Isolator (14) einen Schmelzpunkt von tₘₚ ≥ 200 °C, vorzugsweise von tₘₚ ≥ 250 °C aufweist.

4. Die Durchstrahlverbindungsvorrichtung (1) gemäß einem der vorhergehenden Ansprüche, wobei der thermische Isolator (14) ein thermoplastisches Material, insbesondere ein Polyetheretherketon (PEEK), ist.

5. Die Durchstrahlverbindungsvorrichtung (1) gemäß einem der vorhergehenden Ansprüche, wobei der thermische Isolator (14) eine Dicke in dem Bereich von 1 mm ≤ tᵢ ≤ 10 cm, vorzugsweise 2,5 mm ≤ tᵢ ≤ 7,5 cm und insbesondere bevorzugt 5 mm ≤ tᵢ ≤ 5 cm aufweist.

6. Die Durchstrahlverbindungsvorrichtung (1) gemäß einem der vorhergehenden Ansprüche, wobei das erste Werkzeug (10) zusätzlich eine Anti-Haft-Beschichtung (16) angrenzend an den thermischen Isolator (14) aufweist, sodass die Anti-Haft-Beschichtung (16) in mindestens dem Kontaktbereich des ersten Werkzeugs (10) mit dem ersten Bauteil (3) vorliegt.

7. Die Durchstrahlverbindungsvorrichtung (1) gemäß Anspruch 6, wobei die Anti-Haft-Beschichtung (16) aus Polytetrafluorethylen besteht.

8. Die Durchstrahlverbindungsvorrichtung (1) gemäß einem der vorhergehenden Ansprüche, wobei der erste (12) und/oder der zweite Träger (22) zumindest teilweise aus einem Metall bestehen, insbesondere aus Stahl oder Aluminium.

9. Ein Verbindungsverfahren, das eine Durchstrahlverbindungsvorrichtung (1) gemäß einem der vorhergehenden Ansprüche verwendet, um ein aus einem lichtabsorbierenden Material hergestelltes erstes Bauteil (3) mit einem aus einem lichtdurchlässigen Material hergestellten zweiten Bauteil (5) zu verbinden, wobei das erste Bauteil (3) zumindest in einem Verbindungsbereich eine hohe thermische Leitfähigkeit in dem Bereich von λ ≥ 50 W/(m K) aufweist, und das Verbindungsverfahren weist die Schritte auf:
a. Anordnen des ersten Bauteils (3) in dem ersten Werkzeug (10),
b. Anordnen des zweiten Bauteils (5) in dem zweiten Werkzeug (20),
c. Bewegen des ersten (10) und des zweiten Werkzeugs (20) relativ zueinander in eine Verbindungsposition, in der das erste (3) und das zweite Bauteil (5) zumindest teilweise aneinander anliegen, vorzugsweise mit den entsprechenden Verbindungsbereichen, danach
d. Ausüben einer Schweißkraft auf das erste (3) und das zweite Bauteil (5) sowie Durchstrahlen des ersten (3) und des zweiten Bauteils (5) mittels einer Lichtquelle während des Ausübens der Schweißkraft, wobei das erste (3) und das zweite Bauteil (5) vorzugsweise in den Verbindungsbereichen durchstrahlt werden, anschließend
e. Bewegen des ersten (10) und des zweiten Werkzeugs (20) relativ zueinander aus der Verbindungsposition heraus.

10. Das Verbindungsverfahren gemäß Anspruch 9, wobei die Lichtquelle eine Laserlichtquelle ist.

11. Das Verbindungsverfahren gemäß einem der Ansprüche 9 oder 10, wobei der Schritt des Anordnens des zweiten Bauteils (5) in dem zweiten Werkzeug (20) die folgenden Schritte aufweist:
b1. Anordnen des zweiten Bauteils (5) auf dem ersten Bauteil (3) in dem ersten Werkzeug (10) und
b2. Bewegen des ersten (10) und des zweiten Werkzeugs (20) relativ zueinander in eine Transferposition, in der das zweite Werkzeug (20) das zweite Bauteil (5) aufnimmt.

12. Das Verbindungsverfahren gemäß einem der Ansprüche 9 bis 11, wobei die thermische Leifähigkeit des ersten Bauteils (3) in dem Bereich von λ ≥ 75 W/(m K), insbesondere bevorzugt λ ≥ 100 W/(m K) liegt.

13. Eine Verbindungsstruktur (7) bestehend aus einem aus einem lichtabsorbierenden Material hergestellten ersten Bauteil (3) und einem aus einem lichtdurchlässigen Material hergestellten zweiten Bauteil (5), wobei das erste Bauteil (3) zumindest in einem Verbindungsbereich, in dem es mit dem zweiten Bauteil (5) verbunden ist, eine hohe thermische Leifähigkeit in dem Bereich von λ ≥ 50 W/(m K) aufweist.

## Revendications

1. Dispositif de connexion par transmission traversante (1) pour la connexion d'un premier composant (3) constitué d'un matériau absorbant la lumière à un deuxième composant (5) constitué d'un matériau transmettant la lumière au moyen d'une technologie de collage par transmission de lumière, comprenant
a. un premier outil (10) monté sur un premier support (12) retenant le premier composant (3) et
b. un deuxième outil (20) monté sur un deuxième support (22) retenant le deuxième composant (5), dans lequel
c. le premier (10) et le deuxième outil (20) sont déplaçables l'un par rapport à l'autre et
d. le premier outil (10) est au moins partiellement constitué ou comprend une couche d'un isolateur thermique (14) présentant une résistance thermique élevée, **caractérisé en ce que**
e. l'isolateur thermique (14) présente une conductivité thermique de λ ≤ 2 W/(m K) de sorte que l'isolateur thermique (14) empêche au moins la conduction thermique.

2. Dispositif de connexion par transmission traversante (1) selon la revendication 1, dans lequel l'isolateur thermique (14) présente une conductivité thermique de λ ≤ 1 W/(m K).

3. Dispositif de connexion par transmission traversante (1) selon l'une des revendications précédentes, dans lequel l'isolateur thermique (14) présente un point de fusion de tₘₚ ≥ 200 °C, de préférence de tₘₚ ≥ 250 °C.

4. Dispositif de connexion par transmission traversante (1) selon l'une des revendications précédentes, dans lequel l'isolateur thermique (14) est une matière thermoplastique, en particulier une polyéther éther cétone (PEEK).

5. Dispositif de connexion par transmission traversante selon l'une des revendications précédentes, dans lequel l'isolateur thermique (14) présente une épaisseur dans la plage de 1 mm ≤ tᵢ ≤ 10 cm, de préférence de 2,5 mm ≤ tᵢ ≤ 7,5 cm et de façon particulièrement préférée de 5 mm ≤ ti ≤ 5 cm.

6. Dispositif de connexion par transmission traversante (1) selon l'une des revendications précédentes, dans lequel le premier outil (10) comprend également un revêtement antiadhésif (16) adjacent à l'isolateur thermique (14), de sorte que le revêtement antiadhésif (16) est présent au moins dans la zone de contact du premier outil (10) avec le premier composant (3).

7. Dispositif de connexion par transmission traversante (1) selon la revendication 6, dans lequel le revêtement antiadhésif (16) est composé de polytétrafluoroéthylène.

8. Dispositif de connexion par transmission traversante (1) selon l'une des revendications précédentes, dans lequel le premier (12) et/ou le deuxième support (22) sont au moins partiellement constitués d'un métal, en particulier d'acier ou d'aluminium.

9. Procédé de connexion utilisant un dispositif de connexion par transmission traversante (1) selon l'une des revendications précédentes pour la connexion d'un premier composant (3) constitué d'un matériau absorbant la lumière à un deuxième composant (5) constitué d'un matériau transmettant la lumière, dans lequel le premier composant (3) présente une conductivité thermique élevée au moins dans une partie de connexion dans la plage de λ ≥ 50 W/(m K), et le procédé de connexion comprend les étapes suivantes :
a. agencement du premier composant (3) dans le premier outil (10),
b. agencement du deuxième composant (5) dans le deuxième outil (20),
c. déplacement du premier (10) et du deuxième outil (20) l'un par rapport à l'autre dans une position de connexion dans laquelle le premier (3) et le deuxième composant (5) butent l'un contre l'autre au moins partiellement, de préférence avec les parties de connexion respectives, après quoi
d. application d'une force de soudage sur le premier (3) et le deuxième composant (5) et irradiation du premier (3) et du deuxième composant (5) au moyen d'une source de lumière pendant l'application de la force de soudage, dans lequel le premier (3) et le deuxième composant (5) sont de préférence irradiés dans les parties de connexion, ensuite
e. déplacement du premier (3) et du deuxième outil (20) l'un par rapport à l'autre hors de la position de connexion.

10. Procédé de connexion selon la revendication 9, dans lequel la source de lumière est une source de lumière laser.

11. Procédé de connexion selon l'une des revendications 9 ou 10, dans lequel l'étape d'agencement du deuxième composant (5) dans le deuxième outil (20) comprend l'étape suivante :
b1. agencement du deuxième composant (5) sur le premier composant (3) dans le premier outil (10) et
b2. déplacement du premier (10) et du deuxième outil (20) l'un par rapport à l'autre dans une position de transfert dans laquelle le deuxième outil (20) reçoit le deuxième composant (5).

12. Procédé de connexion selon l'une des revendications 9 à 11, dans lequel la conductivité thermique du premier composant (3) est comprise dans la plage de λ ≥ 75 W/(m K), de façon particulièrement préférée de λ ≥ 100 W/(m K).

13. Structure de connexion (7) comprenant un premier composant (3) constitué d'un matériau absorbant la lumière et un deuxième composant (5) constitué d'un matériau transmettant la lumière, dans laquelle le premier composant (3) présente, au moins dans une partie de connexion dans laquelle il est connecté au deuxième composant (5), une conductivité thermique élevée dans la plage de λ ≥ 50 W/(m K).
